Europäisches Patentamt

European Patent Office

Office européen des brevets

(11) Publication number: **0 121 316**
**B1**

# EUROPEAN PATENT SPECIFICATION

(45) Date of publication of patent specification: **12.08.87**

(51) Int. Cl.⁴: **B 29 C 33/46, B 29 C 45/43**

(21) Application number: **84301212.1**

(22) Date of filing: **24.02.84**

(54) **A method of releasing an inner mold from a rubbery elastic molding.**

(30) Priority: **25.02.83 JP 29278/83**

(43) Date of publication of application:
**10.10.84 Bulletin 84/41**

(45) Publication of the grant of the patent:
**12.08.87 Bulletin 87/33**

(84) Designated Contracting States:
**DE FR GB**

(56) References cited:
**DD-A- 87 160**
**DE-A-2 825 640**
**DE-A-2 832 177**
**DE-A-3 043 275**
**GB-A-1 572 926**
**GB-A-2 042 409**
**US-A-4 364 895**

(73) Proprietor: **NGK INSULATORS, LTD.**
**2-56, Suda-cho, Mizuho-ku**
**Nagoya-shi, Aichi 467 (JP)**

(72) Inventor: **Goto, Daisaku**
**215-101, Konan-Danchi 1-2, Fujigaoka 7-chome**
**Konan City (JP)**
Inventor: **Sugimoto, Hikoharu**
**344-3, Momoyama-Cho 1-chome**
**Kasugai City (JP)**
Inventor: **Kato, Nobuyuki**
**55-402, Iwakura-Danchi 52, Shimosakai**
**Higashishin-Machi Iwakura City (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

This invention relates to a method of releasing an inner mold from a rubber elastic molding, especially a molding having a plurality of corrugations on its longitudinal inner surface. The invention is particularly, but not exclusively applicable to the release of a long integral sheath formed of a rubbery elastic insulating material which is to form part of a synthetic resin electric insulator.

Recently, there has been practical use of a synthetic resin electrical insulator as disclosed in, for instance, Japanese Laid Open Patent Application No. 73,821/1981 in which the whole surface of a fiber reinforced plastic (FRP) rod (excluding metal fitting members attached to the rod at both ends thereof) is covered with sheath made of a rubbery elastic insulating material such as silicone rubber, ethylene propylene rubber or the like. This synthetic resin electrical insulator has the merits that it is light in weight and high in mechanical strength and that it can be put to various uses by appropriate selection of the material or shape of the sheath.

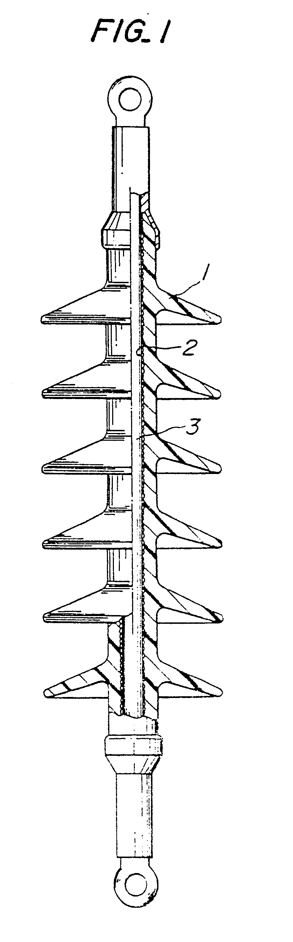

In particular, an electrical insulator shown in Fig. 1 of the accompanying drawings having a long integral sheath 1 with a corrugation 2 on the wall of its inner longitudinal cavity has been recently used because its electric insulation performance at the interface between an FRP rod 3 and the sheath 1 is very good.

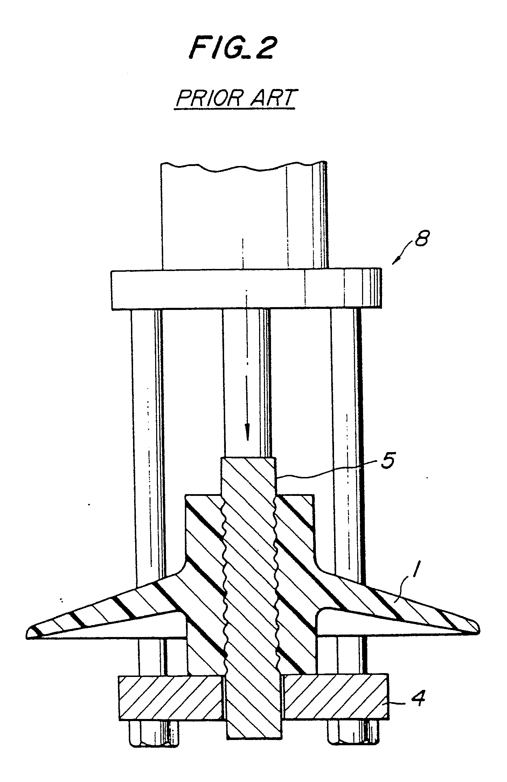

Hitherto, in the shaping of a sheath formed of a rubbery elastic insulating material and having corrugations on the wall of its inner longitudinal cavity as described above, a separable outer mold having an inner surface configuration corresponding to the exterior contour of the sheath and an inner mold (mandrel) forming the undulating corrugation in the inner longitudinal cavity of the sheath have been used. A rubbery elastic insulating material such as silicone rubber or ethylene propylene rubber is injected into the space between the outer mold and the mandrel. In the case where the mandrel is released from a molding (sheath) obtained by curing the elastic insulating material between the outer mold and the mandrel, conventionally the outer mold is firstly opened into two halves; then, as shown in Fig. 2, one end of the sheath 1 is fixed onto a support base 4, and the mandrel 5 is pushed out from the molding in the direction of the arrow by means of a releasing device 8 (for convenience, Fig. 2 shows the sheath 1 in shortened form).

Using this release method, it is possible to push out the mandrel when the sheath is as relatively short as 20—30 cm, but the corrugations, more specifically the projecting portions of the mandrel, are firmly engaged with the molding, so that when the mandrel is pushed out from the molding, an excess force is inevitably applied to the corrugations of the inner surface of the sheath which is likely to be damaged, while the end surface of the sheath is abnormally compressed and an internal defect is also likely to be caused. Particularly, these phenomena are conspicuous in the formation of a sheath as long as several meters. In summary, it has been almost impossible to release a mandrel by the conventional method from a long molding having the corrugation in its inner longitudinal surface without causing damage to the corrugated portion.

DE—A—2,832,177 and DE—A—3,043,275 both relate to a method in which a thin and lightweight small size molding is released from a core (inner mold) using a compressed gas. In both, an inlet opening for the compressed gas is formed at one end of a core portion, this being the end from which the molding is removed from this core portion, and the pressure of the compressed gas flowing into this gap and separating the molding from the core acts to pull the molding from the core. Both methods involve, at least temporarily, the application of a substantial axial tensile force upon the molding. Furthermore, the compressed gas is first applied to the molding at a point of separation of two inner core portions.

It is therefore, an object of the present invention to eliminate or reduce the above problems encountered by the prior art and to provide a method of reliably releasing a mandrel from a long integral molding composed of a rubber elastic material, particularly one having corrugations in its longitudinal inner surface, without causing damage on the corrugation.

The present invention is set out in the claim. The pressurized medium may be gas or liquid.

Embodiments of the invention will now be described by way of non-limitative example with reference to the accompanying drawings, in which:—

Fig. 1, already described, is a partial sectional view illustrating the construction of a synthetic resin electrical insulator;

Fig. 2, also already described, is a partial sectional schematic view illustrating a conventional releasing method;

Fig. 3 is a sectional view of a first arrangement for performing a method of the invention; and

Figs. 4 and 5 are schematic sectional views illustrating other arrangements for the releasing method according to the invention.

Although to exemplify the invention, description is made of a seamless integral sheath 1 made of an elastic insulating material and provided with a plurality of corrugations 2 in its inner longitudinal cavity and a plurality of overhangs in its outer portions, the invention is not limited to this case and can be applied generally if the molding is of rubbery elastic having unevenness of the inner surface.

In the illustrated embodiments of the invention, there is provided means for forming a gap between the mandrel and the molding at one axial end of the latter, and for forming a passage or conduit for supplying a pressurized medium such as air or other gas or liquid such as water, oil, grease or the like into the interface between the mandrel having corrugations in its outer surface and the molding (sheath) and the pressure medium is supplied from the passage or conduit to expand the molding in the radial direction, to allow the mandrel to be removed from the molding.

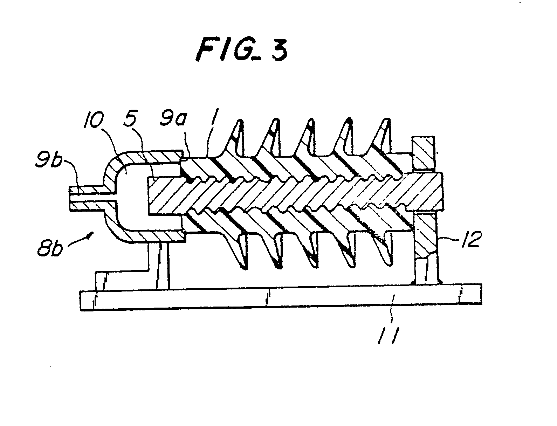

In the embodiment of Fig. 3 the mold-releasing device comprises a cup-shape high pressure chamber 10 made of a metal or a plastics material and provided with a sealing face 9a, which engages one end surface of the sheath 1 and seals said chamber, and with a passage 9b through which high pressure air is introduced. It is not necessary directly to join the mold-releasing device 8a to the top end of the mandrel 5, so that no seam is formed at the join on the inner cavity of the sheath 1. For this reason, this embodiment may be preferable.

In the mold-releasing device 8b of Fig. 3, one end of the sheath 1 is air-tightly connected to the sealing face 9a of the chamber 10 which is fixed to the base support 11, and another end of the sheath 1 is held by a holding member 12 also secured to the base support 11, so that the sheath is compressed between the sealing face 9a and the holding member 12.

The method of releasing the inner mold from the molding according to the invention will now be explained for the mold-releasing device shown in Fig. 3.

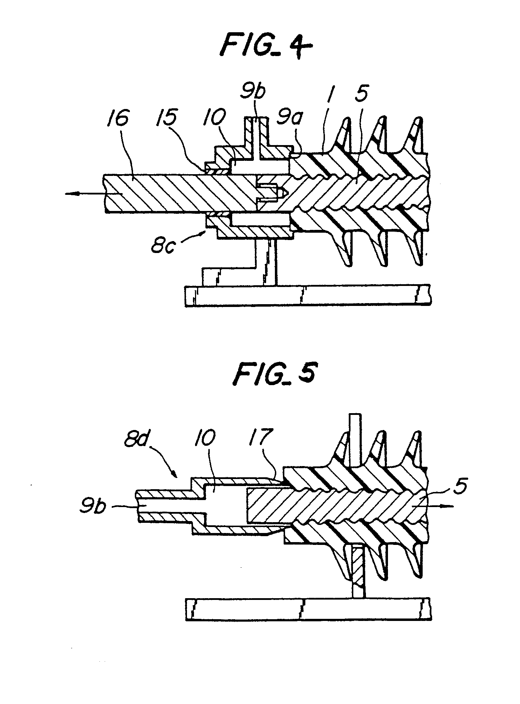

After a separable outer mold is taken away, as shown in Fig. 4, gaps are formed between the sheath 1 and the mandrel 5 at both end portions of the sheath 1 by compressing the sheath 1 between the sealing face 9a of the releasing device 8b and the securing member 12. High pressure air is charged into the chamber 10 for example at $3 \times 10^5 \div 5 \times 10^5$ Pa (3—5 kg/cm²·G), preferably $3.5 \times 10^5 - 4 \times 10^5$ Pa (3.5—4 kg/cm²·G) through the passage 9b from an appropriate pressure device (not shown) such as air compressor or the like. The pressurized air is caused to enter at the interface between the sheath 1 and the mandrel 5 from the chamber 9. The sheath 1 is thus expanded outwardly in a radial direction and a gap is formed over the entire longitudinal extent of the interface between the mandrel 5 and the sheath 1. The mandrel 5 is then removed from the sheath 1 by pulling while the sheath 1 remains radially expanded. If, when the mandrel 5 is moved, a corrugation on the inner surface of the sheath 1 is brought into contact with a corrugation of the mandrel 5, the pressurized air becomes sealed in again, so that the sheath 1 is further expanded in the radial direction by the air, forming a wider space between the sheath and the mandrel. In this way, the inner diameter of the sheath 1 is sufficiently enlarged by the air, to allow the mandrel 5 to be removed from the sheath 1 with ease and accuracy irrespective of the length of the sheath and without damaging the sheath.

Another form of the embodiment of the mold-releasing device 8b of Fig. 3 is shown in Fig. 4. This mold-releasing device 8c has a cup-shape high pressure chamber 10 having an aperture in its base and a seal 15 which seals said chamber against the mandrel (or an auxiliary extension 16 thereof) which is inserted through the seal. The portion of the mandrel 5 extending from the sheath 1 thus has sufficient length that it can extend through the seal 15 or an auxiliary extension 16 is as shown, attached to the mandrel so that the extension 16 extends through the seal 15.

The method of releasing the inner mold from the molding using the device 8c of Fig. 4 is as follows. The device 8c is arranged at one end of the sheath 1, and the peripheral edge of the sheath is pushed onto the sealing face 9a of the device by pulling the mandrel 5 in the direction of the arrow in Fig. 4, whereby a gap is formed between the sheath 1 and the mandrel 5 at the end of the sheath 1. Then, high pressure air is fed via the passage 9b to expand the sheath 1 radially in the manner described for the other embodiments and the mandrel 5 is released from the sheath. In this example, the mandrel is moved in the other direction in the releasing operation compared with the embodiments previously described. It is preferable that the axial length of the seal 15, in which a seal is achieved by tightly pressing the mandrel as it passes therethrough, is greater than the pitch of the corrugations of the mandrel, because pressure loss due to leakage of the high pressure air is thereby prevented or minimized.

In order to form a gap through which the high pressure air can be forcedly introduced between the molding and the inner mold (mandrel) and which communicates with the high pressure chamber, a mold-releasing device provided with a ring-shaped wedge member may be used as shown in Fig. 5. This device 8d has a circular wedge portion 17 as the extremity of the high pressure chamber 10, the inner diameter of which is slightly larger than the outer diameter of the inner mold. The high pressure air introduced from a passage 9b passes between this wedge portion 17 and the inner mold and enters the gap created between the molding and the inner mold to radially expand the inner wall of the molding, so that the inner mold can be taken away from the molding in the direction of the arrow.

In the above, high pressure air has been described as the pressure medium by which the sheath is radially expanded, but the present invention can be carried out using other pressurized mediums such as gas, oil or greasy substances. Particularly, an oil or a greasy substance not only facilitates the releasing operation by its lubricating action but also such a substance may be used together with a filler which is to be charged into the interior of the sheath when the electric insulator is assembled. In this way, a separate step of charging the filler can be omitted.

As described in the above embodiments, since the inner mold can easily be pulled out, the mold can be released manually from the sheath but this release can be also done by appropriate use of for example hydraulic power means adapted to move the mandrel in the axial direction.

## Claim

A method of releasing an inner mold (5) from a sheath-shaped rubbery elastic molding (1) which has been molded and cured from a rubbery elastic material between an inner mold (5) having a corrugated outer surface and an outer mold, wherein a pressurized medium is introduced between the molding and the inner mold, and the molding and the inner mold are relatively moved axially, characterized in that the method comprises the steps of forming a gap (9) between the molding and the inner mold at one axial end of the molding by either applying a compression force upon one of the opposite ends of the molding in an axial direction thereof or inserting an annular wedge (17) into the interface between the molding and the inner mold, causing said gap to be in communication with a pressurized medium, introducing the pressurized medium through the gap so as to expand the inner cavity of the molding in the radial direction and form a space between the molding and the inner mold which extends over substantially the entire length of the molding and extracting the inner mold.

## Patentanspruch

Verfahren zum Lockern eines inneren Formkerns (5) von einem mantelförmigen gummiartigen elastischen Formling (1), der aus einem elastischen gummiartigen Material zwischen einem inneren Formkern (5) mit welliger Außenfläche und einer äußeren Form gegossen und ausgehärtet wurde, bei dem ein Druckmittel zwischen den Formling und den inneren Formkern eingebracht und der Formling und der innere Formkern in Axialrichtung relativ zueinander bewegt werden, dadurch gekennzeichnet, daß zwischen dem Formling und dem inneren Formkern an einem axialen Ende der Form ein Spalt (9) gebildet wird, in dem entweder eine Druckkraft auf eines der gegenüberliegenden Enden des Formlings in Axialrichtung desselben aufgebracht wird, oder in dem ein ringförmiger Keil (17) in die Trennfläche zwischen dem Formling und dem inneren Formkern eingeführt wird, daß der Spalt mit dem Druckmittel in Verbindung gebracht wird, daß das Druckmittel durch den Spalt eingeführt wird, um den inneren Hohlraum des Formlings in radialer Richtung aufzuweiten und einen Zwischenraum zwischen dem Formling und dem inneren Formkern zu schaffen, der sich im wesentlichen über die gesamte Länge des Formlings erstreckt, und daß der innere Formkern herausgezogen wird.

## Revendication

Méthode de libération d'un moule intérieur (5) par rapport à un moulage élastique caoutchouteux (1) en forme de gaine qui a été moulé et durci en un matériau élastique caoutchouteux entre un moule intérieur (5) ayant une surface extérieure ondulée et un moule extérieur, où un fluide sous pression est introduit entre le moulage et le moule intérieur et le moulage et le moule intérieur sont relativement axialement déplacés, caractérisée en ce que la méthode comprend les étapes de former un espace (9) entre le moulage et le moule intérieur à une extrémité axiale du moulage, soit en appliquant une force de compression sur l'une des extrémités opposées du moulage dans une direction axiale ou en insérant un coin annulaire (17) dans l'interface entre le moulage et le moule intérieur, de forcer ledit espace à être en communication avec un fluide sous pression, d'introduire le fluide sous pression dans l'espace afin de dilater la cavité intérieure du moulage en direction radiale et de former un espace entre le moulage et le moule intérieur qui s'étend sensiblement sur toute la longueur du moulage et d'extraire le moule intérieur.

FIG. 1

0 121 316

1

# FIG. 2

## _PRIOR ART_

## FIG. 3

## FIG. 4

## FIG. 5